(19) Europäisches Patentamt
European Patent Office
Office européen des brevets

(11) **EP 4 614 122 A1**

(12) **EUROPEAN PATENT APPLICATION**

(43) Date of publication:
**10.09.2025 Bulletin 2025/37**

(21) Application number: **24167702.0**

(22) Date of filing: **28.03.2024**

(51) International Patent Classification (IPC):
**G01J 3/02** (2006.01)   **G01J 3/28** (2006.01)
**G01J 3/50** (2006.01)   **G01J 3/52** (2006.01)
**G01J 3/46** (2006.01)

(52) Cooperative Patent Classification (CPC):
**G01J 3/28; G01J 3/0264; G01J 3/027; G01J 3/50;
G01J 3/524;** G01J 3/463

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.03.2024 US 202463561395 P**

(71) Applicant: **Nix Sensor Ltd.
Hamilton, ON L8L 6A1 (CA)**

(72) Inventors:
• **PAEZ, Dixon**
  **Ancaster, L9G 0G5 (CA)**
• **SHERIDAN, Matthew**
  **Dundas, L9H 6X3 (CA)**
• **STRACK, James**
  **Hamilton, L8L 3N4 (CA)**
• **LANGILLE, Thomas**
  **Hamilton, L9A 4P2 (CA)**

(74) Representative: **Appleyard Lees IP LLP
15 Clare Road
Halifax HX1 2HY (GB)**

(54) **SYSTEM FOR SPECTROPHOTOMETRY**

(57) A method for providing color measurement functionality to end users comprises: providing calibration substrates to said end users, each substrate bearing an indicator that is associated with the color of the substrate; and providing a spectrophotometry system to said end users. The system includes a spectrophotometer adapted to generate a spectrum associated with a measurement and an arrangement which is adapted to: receive spectrums from the spectrophotometer of an end user; receive the indicator of a calibration substrate; selectively conduct a comparison between a received spectrum and the spectrum of the color of the calibration substrate; and in response to the comparison, perform one of a predetermined group of actions.

Figure 1: Flow-chart depicting the diagnostics tile workflow performed by the Nix software

## Description

### FIELD

The invention relates to the field of spectrophotometry.

### BACKGROUND

Spectrophotometry instruments with relatively good performance remain relatively expensive such that improvements remain of interest.

### SUMMARY

Forming one aspect of the invention is a method for providing color measurement functionality to end users, the method comprising:

- providing calibration substrates to said end users, each substrate bearing an indicator that is associated with the color of the substrate;
- providing a spectrophotometry system to said end users, the system including a spectrophotometer adapted to generate a spectrum associated with a measurement and an arrangement which is adapted to:

  ◦ receive spectrums from the spectrophotometer of an end user;
  ◦ receive the indicator of a calibration substrate;
  ◦ selectively conduct a comparison between a received spectrum and the spectrum of the color of the calibration substrate; and
  ◦ in response to the comparison, perform one of a predetermined group of actions.

According to another aspect, the indicator can be a QR code.
According to another aspect, the QR code can contain the spectrum of the substrate.
According to another aspect, if the difference between the received spectrum and the spectrum of the color of the calibration substrate is below a predetermined threshold of divergence, the arrangement can inform the end user that the spectrophotometer is functioning.
According to another aspect, if the difference between the received spectrum and the spectrum of the color of the calibration substrate is within a predetermined range of divergence, the arrangement recalibrates the spectrophotometer and informs the end user that the spectrophotometer is functioning.
According to another aspect, the arrangement can be adapted to permit the user to trigger a calibration step, wherein the arrangement is adapted to prompt the user to scan the calibration tile.
According to another aspect, if ambient light is detected in the scan following the prompt, the user can be prompted to scan the calibration tile.
According to another aspect, the arrangement can provide end users the option to deliver scan results to the provider of the calibration substrates and/or the spectrophotometers.
Advantages, features and characteristics of the present invention will become apparent upon review of the following detailed description with reference to the appended drawings, the latter being briefly described hereinafter.

### BRIEF DESCRIPTION OF THE DRAWINGS

In the drawings

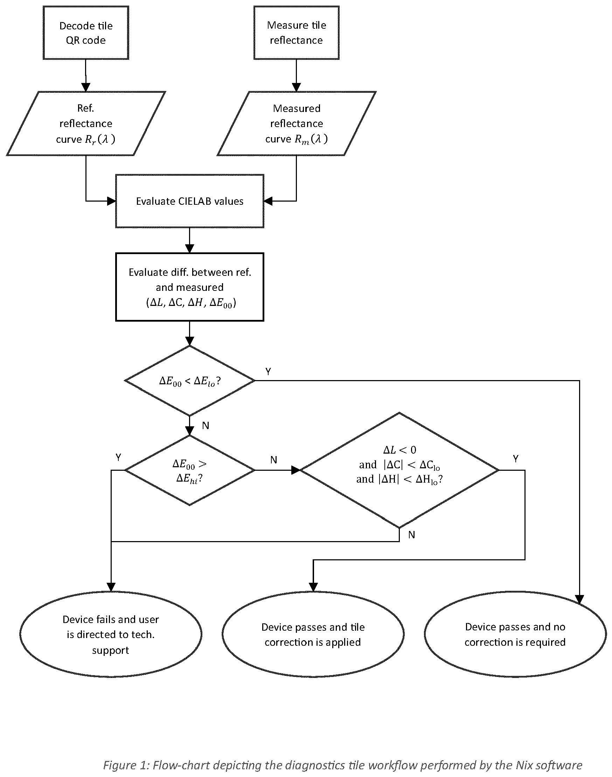

FIG. 1    flow chart depicting workflow performed in the method; Flow-chart depicting the diagnostics tile workflow performed by the Nix software;

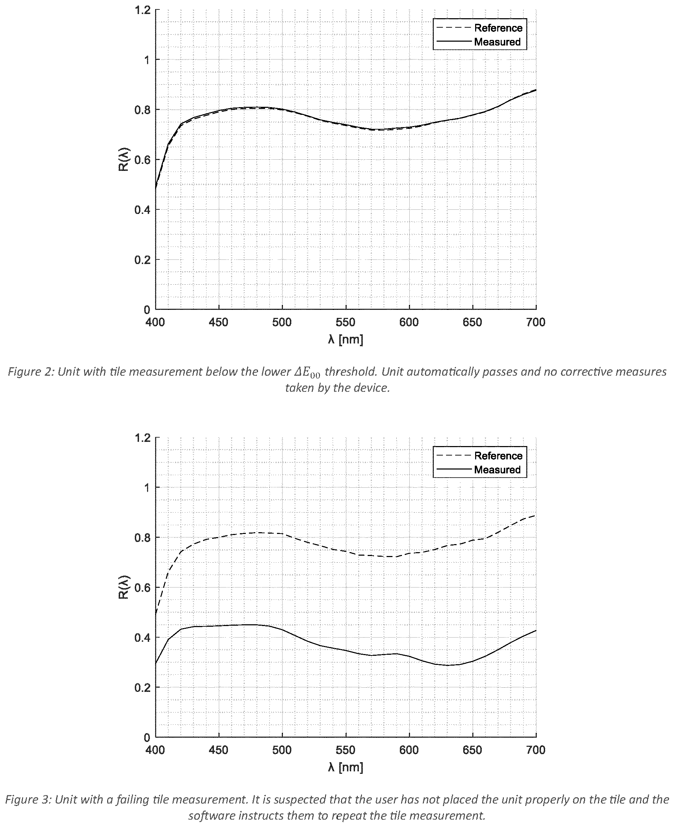

FIG. 2    example spectrum for a well-calibrated functioning spectrophotometer; Unit with tile measurement below the lower $\Delta E_{00}$ threshold. Unit automatically passes and no corrective measures taken by the device.

FIG. 3    example spectrum for a spectrophotometer that is either not functioning properly or was not properly used; Unit with a failing tile measurement. It is suspected that the user has not placed the unit properly on the tile and the software instructs them to repeat the tile measurement.

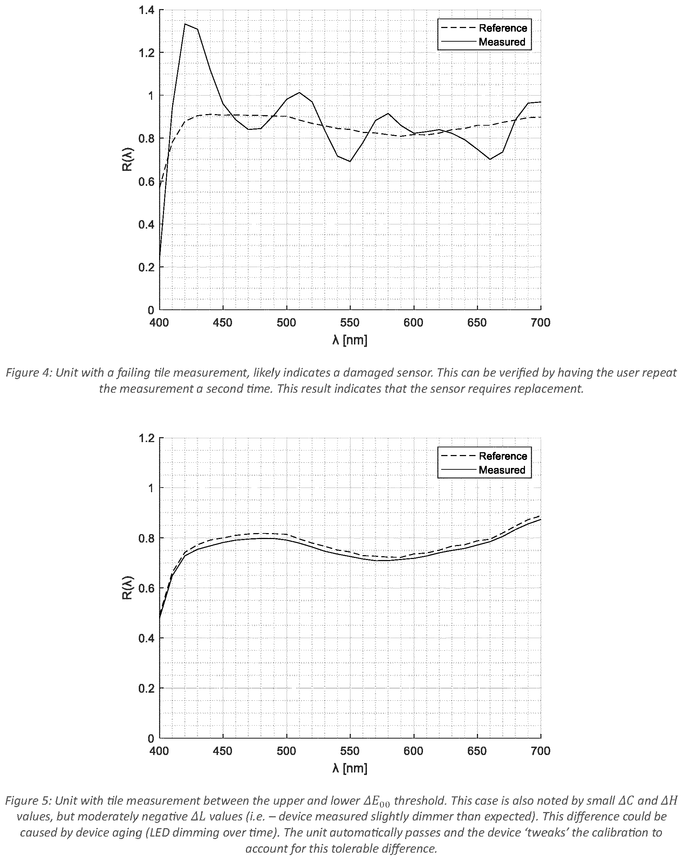

FIG. 4    spectrum representative of that obtained from a damaged spectrophotometer sensor; Unit with a failing tile measurement, likely indicates a damaged sensor. This can be verified by having the user repeat the measurement a second time. This result indicates that the sensor requires replacement.

FIG. 5    example spectrum that is within the predetermined range that permits self-calibration; Unit with tile measurement between the upper and lower $\Delta E_{00}$ threshold. This case is also noted by small $\Delta C$ and $\Delta H$ values, but moderately negative $\Delta L$ values (i.e. - device measured slightly dimmer than expected). This difference could be caused by device aging (LED dimming over time). The unit automatically passes and the device 'tweaks' the calibration to account for this tolerable difference.

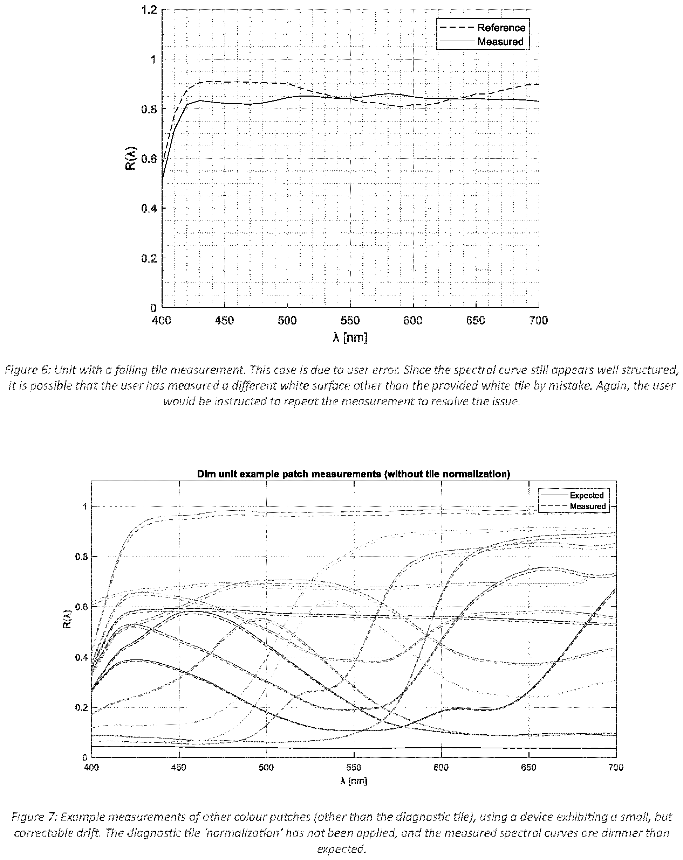

FIG. 6    example spectrum for a spectrophotometer that was not properly used; Unit with a failing tile measurement. This case is due to user error. Since the spectral curve still appears well structured, it is possible that the user has measured a different white surface other than the provided white tile by mistake. Again, the user would be instructed to repeat the measurement to resolve the issue.

FIG. 7  example measurement of a device exhibiting a small but correctable drift; Example measurements of other colour patches (other than the diagnostic tile), using a device exhibiting a small, but correctable drift. The diagnostic tile 'normalization' has not been applied, and the measured spectral curves are dimmer than expected.

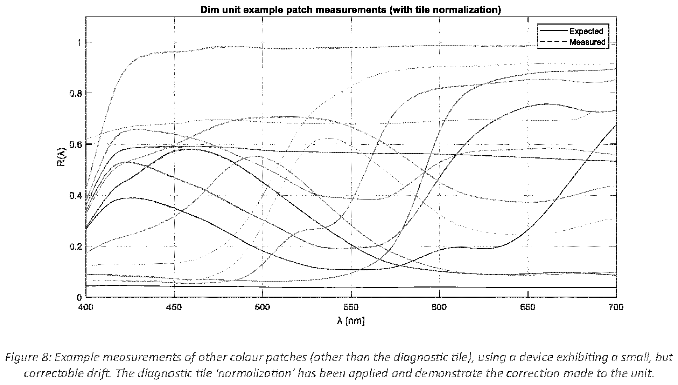

FIG. 8  example spectrum of the device of FIG. 7 following self-calibration; Example measurements of other colour patches (other than the diagnostic tile), using a device exhibiting a small, but correctable drift. The diagnostic tile 'normalization' has been applied and demonstrate the correction made to the unit.

## DETAILED DESCRIPTION OF EXAMPLE EMBODIMENTS

### Example 1

An example method for providing color measurement functionality to end users comprises providing to end users: (i) calibration substrates; and (ii) a spectrophotometry system including spectrophotometers.

The substrates each bear an indicator that is associated with the color of the substrate. In the example, the substrate is a white plastic tile and the indicator is a QR code that is readable by a cellphone or the like and that contains 31 points which approximate the spectral curve of the tile.

Each spectrophotometer is adapted to generate a spectrum associated with a measurement. Upper and lower $\Delta E$ thresholds exist for the device. The example spectrophotometer is a Nix™ Mini.

The system also includes an arrangement which is adapted to, *inter alia:*

- receive the indicator of a calibration substrate

- permit a user to trigger a calibration step, whereupon the arrangement prompts the user to scan the calibration substrate

- receive a spectrum collected in response to the prompt

- if the received spectrum and the spectrum of the color of the calibration substrate are within a predetermined threshold of divergence [i.e. $\Delta E$ is less than the lower threshold, measurement is very close to the Q code data (within noise floor) as shown in FIG. 2] inform the end user that the spectrophotometer is functioning

- if the received spectrum and the spectrum of the color of the calibration substrate are within a predetermined range of divergence [i.e. $\Delta E$ is between the lower and upper threshold, as shown in FIG. 5], recalibrate the spectrophotometer and inform the end user that the device is functioning within tolerances

- if ambient light is detected in the scan following the prompt, prompt the user to rescan the tile

- if the received spectrum and the spectrum of the color of the calibration substrate are outside the upper threshold, as shown in FIG. 4, inform the user that the device has failed

- provide end users the option to deliver scan results to the provider of the calibration substrates and/or the spectrophotometers.

In the example, the arrangement is defined in part by a smart phone app that functionalizes a smart phone to, inter alia:

- scan the QR code of the tiles

- communicate via BlueTooth with the spectrophotometer

- when the user elects to deliver results to the provider, send to the provider: a full copy of the QR code data, full copy of all measurement data provided by the device, device serial number and user name

The tile and spectrophotometer are provided in the form of a kit, with replacement tiles available if that included in the kit becomes soiled, damaged or lost.

The arrangement can also prompt the user to, for example, change the tile, clean the lens or rescan. This can be the result of, for example, a human review, by the provider of the spectrophotometer, of a spectra provided to the manufacturer, or of a machine analysis. In FIG. 3, for example, the measured value follows the same structure as the expected curve and a logical conclusion is that the user has not placed the spectrophotometer carefully on the tile; in this case, the user could be prompted to scan again, paying careful attention to placement. In FIG. 6, the spectra is well structured, but follows a different shape; here, the user has likely scanned the wrong tile, and would be prompted to rescan the QR. In FIG. 4, the spectra shows significant variance, which is indicative of a damaged sensor; the user could be prompted to double check the reading and, failing improvement, replace the sensor.

**Example 2**

This example also includes tiles bearing QR codes bearing the 'reference' or 'expected' spectral radiance factor for the diagnostics tile ($R_{Dref}(\lambda)$). [This is the reflectance factor that is expected when the attached diagnostics tile is measured by a freshly factory-calibrated device in perfect working order. The reflectance factor is reported for the working range and resolution of the associated type of device (e.g. - 31 points, for 400 to 700 nm at 10 nm intervals).

In this example, when the user measures the diagnostics tile with the device in response to a prompt, as indicated above, the in-field measured reflectance factor ($R_{Dm}(\lambda)$) is recorded by the software.

Several calculations are then completed automatically by the software:

- First, tristimulus colour values X, Y, Z are evaluated from the reference and in-field measured reflectance factors.

    ○ Tristimulus values are calculated from $R_{Dref}(\lambda)$ and $R_{Dm}(\lambda)$ according to CIE standard CIE15:2004

- Second, the tristimulus values are converted to a perceptually uniform colour space, such as CIELAB as defined in standard CIE15:2004. The results of this step are L*, a*, b*, $C^*_{ab}$ , and $h_{ab}$ values for both the reference and measured tile colours.

    ○ The CIELAB colour space is three-dimensional and approximately uniform.
    ○ The three components define the colour lightness (L*), redness vs greenness (a*,) and yellowness vs blueness (b*).
    ○ Chroma ( $C^*_{ab}$, ) and hue angle ($h_{ab}$) are attributes which are calculated from the a* and b* values, by transforming from rectangular to polar coordinates.
    ○ These calculations are performed for both the reference and in-field measured tristimulus values.

- Third, the reference and measured colour values are compared:

    ○ Lightness difference ($\Delta L$) is calculated as defined in CIE standard CIE15:2004
    ○ Chroma difference ($\Delta C$) is calculated as defined in CIE standard CIE15:2004
    ○ Hue difference ($\Delta H$) is calculated as defined in CIE standard CIE15:2004
    ○ Colour difference ($\Delta E_{00}$) is calculated from $\Delta L$, $\Delta C$, and $\Delta H$ according to the CIEDE2000

    ○ total colour difference formula as defined in CIE standard CIE15:2004

CIE standard refers to International Commission on Illumination, CIE 015:2004, 2004.

Thereafter, one of several steps occurs:

- If the colour difference ($\Delta E_{00}$) is below a 'low' threshold, then the device is performing as expected and no action is required. An example of this case is shown in Figure 2. The definition of 'low' $\Delta E_{00}$ corresponds to the expected reproducibility of the specific type of device. Typical values could be $\Delta E_{00} < 0.1$ for high-end devices, or $\Delta E_{00} < 0.4$ for low-end devices.]
- If the colour difference ($\Delta E_{00}$) is above a 'high' threshold, then one of two outcomes follows. If this is a first test, a retest is prompted. If this is a retest, the software alerts the user that the device has failed and the user is directed to the technical support body of the manufacturer. An example of this case is shown in Figure 4. The definition of 'high' $\Delta E_{00}$ can vary by specific device type, but typical values would be $\Delta E_{00} > 3$.
- If the colour difference ($\Delta E_{00}$) is between the 'low' and 'high' thresholds, then one of two outcomes follows. If this is a first test, a retest is prompted. If this is a retest, $\Delta L$ value is negative and $\Delta C$ and $\Delta H$ are both small, as indicated in FIG. 5, a tile correction is applied, as indicated below, resulting in the output shown in FIG. 8. For all other outcomes of a retest, the user is directed to the technical support body of the manufacturer. The definition of "small" herein can vary by specific device, but a typical value for both $\Delta C$ and $\Delta H$ is 0.5

Tile Correction

The correction factor $N(\lambda)$ is evaluated for each of the 31 reported wavelength bins using the reference reflectance curve $R_{Dref}(\lambda)$ and measured reflectance curve $R_{Dm}(\lambda)$ from the diagnostics tile data:

$$N(\lambda) = \frac{R_{D_{ref}}(\lambda)}{R_{D_m}(\lambda)}$$

For the uncorrected device measurement $R_m(\lambda)$ of subsequent patches, the normalized / corrected output $R_c(\lambda)$ is given by:

$$R_c(\lambda) = N(\lambda) \times R_m(\lambda)$$

FIG. 1 is a flow chart showing the above methodology.

Whereas two specific embodiments are described, variations are possible

For example, wherein a single tile is mentioned, multiple tiles with differing colors could be provided with the kit.

Whereas the tile is specified to be plastic, any material that has suitable characteristics (color stability over time and temperature, weather and abrasion resistance) can be utilized and the tile need not be white.

Whereas the QR code details a 31 point spectral curve, the code could contain further points, or could point to a website or the like in which the curve is stored.

Whereas in the example, when delivering results to the provider, a full copy of the QR code data is provided, along with device serial number and user name, this is not essential: all of this data could be provided, for example, in a registration step, and the packet sent might merely include a full copy of all measurement data provided by the device and a calibration tile identifier from which the earlier-delivered data could be collected.

The 31 points could be printed on the tile and manually entered.

Yet further variations are possible.

Accordingly, the invention should be understood to be limited only by the accompanying claims, purposively construed.

**Claims**

1. A method for providing color measurement functionality to end users, the method comprising:

   providing calibration substrates to said end users, each substrate bearing an indicator that is associated with the color of the substrate;
   providing a spectrophotometry system to said end users, the system including a spectrophotometer adapted to generate a spectrum associated with a measurement and an arrangement which is adapted to:

      receive spectrums from the spectrophotometer of an end user;
      receive the indicator of a calibration substrate;
      selectively conduct a comparison between a received spectrum and the spectrum of the color of the calibration substrate; and
      in response to the comparison, perform one of a predetermined group of actions.

2. A method according to claim 1, wherein the indicator is a QR code.

3. A method according to claim 1, wherein the QR code contains the spectrum of the substrate.

4. A method according to claim 1, wherein if the received spectrum and the spectrum of the color of the calibration substrate are within a predetermined threshold of divergence, the arrangement informs the end user that the spectrophotometer is functioning.

5. A method according to claim 1, wherein if the received spectrum and the spectrum of the color of the calibration substrate are within a predetermined range of divergence, the arrangement recalibrates the spectrophotometer and informs the end user that the spectrophotometer is functioning.

6. A method according to claim 1, wherein the arrangement is adapted to permit the user to trigger a calibration step, wherein the arrangement is adapted to prompt the user to scan the calibration tile.

7. A method according to claim 6, wherein, if ambient light is detected in the scan following the prompt, the user is prompted to scan the calibration tile.

8. A method according to claim 6, wherein the arrangement provides end users the option to deliver scan results to the provider of the calibration substrates and/or the spectrophotometers.

Decode tile
QR code

Measure tile
reflectance

Ref.
reflectance
curve $R_r(\lambda)$

Measured
reflectance
curve $R_m(\lambda)$

Evaluate CIELAB values

Evaluate diff. between ref.
and measured
$(\Delta L, \Delta C, \Delta H, \Delta E_{00})$

$\Delta E_{00} < \Delta E_{lo}$?

Y

N

$\Delta E_{00} > \Delta E_{hi}$?

Y

N

$\Delta L < 0$
and $|\Delta C| < \Delta C_{lo}$
and $|\Delta H| < \Delta H_{lo}$?

Y

N

Device fails and user
is directed to tech.
support

Device passes and tile
correction is applied

Device passes and no
correction is required

*Figure 1: Flow-chart depicting the diagnostics tile workflow performed by the Nix software*

*Figure 2: Unit with tile measurement below the lower $\Delta E_{00}$ threshold. Unit automatically passes and no corrective measures taken by the device.*

*Figure 3: Unit with a failing tile measurement. It is suspected that the user has not placed the unit properly on the tile and the software instructs them to repeat the tile measurement.*

*Figure 4: Unit with a failing tile measurement, likely indicates a damaged sensor. This can be verified by having the user repeat the measurement a second time. This result indicates that the sensor requires replacement.*

*Figure 5: Unit with tile measurement between the upper and lower $\Delta E_{00}$ threshold. This case is also noted by small $\Delta C$ and $\Delta H$ values, but moderately negative $\Delta L$ values (i.e. – device measured slightly dimmer than expected). This difference could be caused by device aging (LED dimming over time). The unit automatically passes and the device 'tweaks' the calibration to account for this tolerable difference.*

*Figure 6: Unit with a failing tile measurement. This case is due to user error. Since the spectral curve still appears well structured, it is possible that the user has measured a different white surface other than the provided white tile by mistake. Again, the user would be instructed to repeat the measurement to resolve the issue.*

*Figure 7: Example measurements of other colour patches (other than the diagnostic tile), using a device exhibiting a small, but correctable drift. The diagnostic tile 'normalization' has not been applied, and the measured spectral curves are dimmer than expected.*

Figure 8: Example measurements of other colour patches (other than the diagnostic tile), using a device exhibiting a small, but correctable drift. The diagnostic tile 'normalization' has been applied and demonstrate the correction made to the unit.

Europäisches
Patentamt
European
Patent Office
Office européen
des brevets

## EUROPEAN SEARCH REPORT

**Application Number**

EP 24 16 7702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/183327 A1 (ATKINSON DON [US]; WONG EE [CN]) 17 November 2016 (2016-11-17) * paragraph [0001] - paragraph [0019] * * figures 1, 2 * | 1-3 | INV. G01J3/02 G01J3/28 G01J3/50 G01J3/52 G01J3/46 |
| X | US 6 196 046 B1 (BRAIG JAMES R [US] ET AL) 6 March 2001 (2001-03-06) * column 2, line 35 - column 6, line 21 * * figures 1-8 * | 1-6,8 | |
| X | US 6 008 905 A (BRETON PIERRE [CA] ET AL) 28 December 1999 (1999-12-28) * column 5, line 46 - column 7, line 64 * * figures 1-3 * | 1-7 | |
| X | US 2014/211022 A1 (KOH KOK-WEI [US] ET AL) 31 July 2014 (2014-07-31) * paragraphs [0040], [0041], [0052], [0056] * * figures 1, 2 * | 1-3,6-8 | |
| A | KORIFI RABIA ET AL: "CIEL*a*b*color space predictive models for colorimetry devices - Analysisof", TALANTA, ELSEVIER, AMSTERDAM, NL, vol. 104, 23 November 2012 (2012-11-23), pages 58-66, XP028579527, ISSN: 0039-9140, DOI: 10.1016/J.TALANTA.2012.11.026 * page 61 * | 1 | **TECHNICAL FIELDS SEARCHED (IPC)** G01J A61B |

The present search report has been drawn up for all claims

| Place of search | Date of completion of the search | Examiner |
|---|---|---|
| Munich | 30 September 2024 | Haller, Mirjam |

EPO FORM 1503 03.82 (P04C01)

## ANNEX TO THE EUROPEAN SEARCH REPORT
## ON EUROPEAN PATENT APPLICATION NO.

EP 24 16 7702

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2024

| Patent document cited in search report | | Publication date | Patent family member(s) | | Publication date |
|---|---|---|---|---|---|
| WO 2016183327 | A1 | 17-11-2016 | US | 2018052053 A1 | 22-02-2018 |
| | | | WO | 2016183327 A1 | 17-11-2016 |
| US 6196046 | B1 | 06-03-2001 | AU | 7076800 A | 19-03-2001 |
| | | | CA | 2376329 A1 | 01-03-2001 |
| | | | EP | 1210576 A1 | 05-06-2002 |
| | | | JP | 2003507732 A | 25-02-2003 |
| | | | US | 6196046 B1 | 06-03-2001 |
| | | | WO | 0114848 A1 | 01-03-2001 |
| US 6008905 | A | 28-12-1999 | AU | 1256100 A | 12-07-2000 |
| | | | BR | 9916847 A | 09-10-2001 |
| | | | CA | 2371628 A1 | 29-06-2000 |
| | | | EP | 1147385 A1 | 24-10-2001 |
| | | | JP | 2002533665 A | 08-10-2002 |
| | | | KR | 20010099918 A | 09-11-2001 |
| | | | MX | PA01006360 A | 04-06-2002 |
| | | | US | 6008905 A | 28-12-1999 |
| | | | WO | 0037903 A1 | 29-06-2000 |
| US 2014211022 | A1 | 31-07-2014 | US | 2014211022 A1 | 31-07-2014 |
| | | | US | 2015145989 A1 | 28-05-2015 |

EPO FORM P0459

For more details about this annex : see Official Journal of the European Patent Office, No. 12/82